# EUROPEAN PATENT APPLICATION

(11) **EP 4 276 624 A1**
(43) Date of publication of application: **15.11.2023**
(21) Application number: 22173261.3
(22) Date of filing: 13.05.2022
(51) Int. Cl.: G06F 9/50, G06N 20/00

(54) **A METHOD AND A SERVER FOR INSTALLATION AND EXECUTION OF AN AI MODEL IN AN INDUSTRIAL EXECUTION ENVIRONMENT**

(71) Applicant: Siemens Aktiengesellschaft, 80333 München (DE)
(72) Inventor: Schlaepfer Spinola, Leonardo, 90489 Nürnberg (DE); de Faria Siqueira, Edison, 90403 Nürnberg (DE); Anicet Zanini, Rafael, 90471 Nürnberg (DE)
(74) Representative: Siemens Patent Attorneys

(57) **Abstract**

The invention relates to a method and a server for installation and execution of an AI model in an industrial execution environment. The method comprises, in a first step, installing and executing an Industrial Inference Server Runtime on the industrial execution environment, the Industrial Inference Server (IIS) being a software package set-up for receiving the AI model, connecting the AI model with data sources and data sinks, and executing the AI model. In a second step, transferring, from an AI model manager, the AI model and a configuration file to the Industrial Inference Server (IIS), the configuration file specifying the connections between the data sources and data sinks with parameters of the AI models and specifying execution parameters for the execution of the AI model. In a third step, in accordance with the content of the configuration file, wiring the AI model with the data sources and data sinks, and configuring an AI model runtime environment of the Industrial Inference Server in accordance with the content of the configuration file. Finally, in a fourth step, the method comprises executing the AI model in the AI model runtime environment. This method delivers an Inference Server Runtime (IIS) on Industrial Edge, enabling Industrial Edge Devices (IED) to receive AI models as content and execute them, seamless integrated with the data from different data sources.

## Description

The invention relates to a method and a server for installation and execution of an AI model in an industrial execution environment according to the preamble of patent claim 1, and a server for installation and execution of an AI model in an industrial execution environment according to the preamble of patent claim 9.

The rise of AI (artificial intelligence) for manufacturing is a natural offshoot of the fourth industry revolution. To apply AI in shop floor, we need to understand the application scenario and plan AI application solution, build, and train the model, deploy the AI model into the industry application, run the model in the field with the mapped sensor data, monitor the result, and retrain the model if necessary.

Today, there is a lot of modeling technology and platform offerings by IT companies. AI engineers could also use different AI framework to train their models, e.g. Tensorflow, Keras, PyTorch, Caffe, and several big IT companies also provide technology, product and platform on cloud to the AI engineers to train the models, and the user could run the model with the cloud resources.

However, the inference device in shopfloor (e.g. PLC, PLC acceleration modules, IPC wt/wo accelerators, Industrial Edge Devices) are usually with limited computing power. Bringing AI models to the shopfloor is always a challenge. As described in the paper "Hidden Technical Debt in Machine Learning Systems" (Sculley, D & Holt, Gary & Golovin, Daniel & Davydov, Eugene & Phillips, Todd & Ebner, Dietmar & Chaudhary, Vinay & Young, Michael & Dennison, Dan. (2015) - NIPS. 2494-2502), there are several aspects to consider and different hidden technical debts are present than just the AI Algorithm itself. This results in large masses of "glue code" and increases the complexity of running such algorithms on the shopfloor.

Deploying an AI Model to edge requires not only the knowledge about different kinds of deployment technologies but, with regards to the deployment of AI Models to the shopfloor (edge) in an industrial environment, it demands also the knowledge about the automation system, e.g. the lead time of the automation task, and thus the time requirement on the inference, the accuracy, and even the budget (based on ROI) etc. Thus, aspects on how this model impacts the existing automation system? How can I ingest the data from my automation system to the model in a practical way? How can I manage the several models running on the shopfloor with regards to performance, security, etc.?

Currently, With the growing demand of AI (Artificial Intelligence)-based application in industrial field, the automation engineer and AI expert are working together to find a general solution for automation technology with AI technology built in. There are three major issues that concerns the execution of those AI models on the shopfloor that we address within this document.

### Issue 1:

The various AI models has different way to work with industrial devices like IPC (Industrial Personal Computer) or some specially designed AI-based automation hardware. Engineers must find a specific computer architecture and specific AI framework together with its runtime, to find a best match for their application. This is usually time-consuming and requires a lot of AI deployment know-how.

### Issue 2:

The data types and data sources that might be needed for an AI Model for a given use case can vary a lot. And the way that the data is collected, provided to be used as training data for the Data Scientist and how the trained model will be then executed on the shopfloor and how the data collected will be ingested to the model during inference impact the results of the model. Thus, standardizing data collection and the data ingestion to models is key to scale the deployment solution at the shop floor.

### Issue 3:

When delivering AI Models to the edge, a typical approach is to containerize the AI Model and rely on container solutions like Docker containers. Many existing solutions in the market (e.g. Azure IoT Hub, AWS Sagemaker Neo, etc.) package models with all necessary dependencies into a containerized application that has to be fully deployed to the target system. However, when it comes to scalability and assuming that is intended to have a high number of use cases addressed by AI solutions running at the shop floor, having self-made containers running on industry shop floor brings different challenges as listed below:
- Lifecycle management for the different custom-made containers running at the shop floor
- Security flaws with the custom-made containers
- Container OS security patches
- Hard to extend or upgrade libraries and dependencies versions
- Lack of a centralized deployment management for the different AI models running at the shop floor
- Hard to scale to multiple types and number of target devices
- Governance between IT/OT
- High effort for maintenance
- High effort for controlling deployed versions

### Issue 4:

Real life AI Applications have a variety of scenarios such as single stream, multistream, server and offline (as described in "The Vision Behind MLPerf" ).
- Single stream: one inference query stream with a sample size of one, reflecting the many client applications where response latency is critical.
- Multistream: a stream of queries, and each query comprises multiple inferences, reflecting a variety of industrial-automation applications. Thus, a query comprising N input samples at a fixed interval (e.g., 50ms).
- Server: represents online applications where query arrival is random, and latency is important.
- Offline: represents batch processing where all data are available, and latency is unconstrained.

Due to the different scenarios and use cases, the data traffic must be adapted properly, and it is challenging to reach the different requirements within a common deployment strategy.

### Issue 5:

For time series applications, the different datapoints collected from different data sources can be misaligned in time due to several reasons, as normally the data can be collected under heterogeneous conditions, because of different times of measurement, contexts or even measurement modalities. In this context, for data scientists and AI Algorithms that rely on the correlations that are found in training data, aligning times series datasets into a consistent dataset for training and inferencing becomes challenging.

These issues are not fully solved now by any solutions available on the market.

AI hardware vendors (e.g., Intel, NVIDIA, Google Coral) usually provide their own model compilation and deployment tools, selling them together with the hardware or making ready-to-use containerized environments available for customers on public repositories or registries to take and use. However, this must be performed for each target HW that customer wants to deploy to, making it very complex for OT and IT engineers to manage and handle all various drivers, compilation and runtime environments necessary for all different types of chips and HW providers (issue 1).

Some IT companies provide different systems and solutions to implement the so called MLOPs lifecycle, helping users to training their models, wrap that as a container and deliver the container to the be executed on an Edge device (issue 3) - however, most of the R&D investment on this comes from the IT companies which historically lack the industrial expertise on the integration with existing automation systems.

Some OT companies also provide IT solutions, but it is usually (limited) use case based and are tightly bonded to some specified HW. Such use case solution may not be able to meet all customer specific requirements, as the user has no chance to validate it against their own requirements, as they can usually only order the HW and test the solution within their shopfloor environment.

For example, the Kubeflow solution initially developed by Google, which can make deployments of machine learning workflows on Kubernetes clusters, is a simple, portable, and scalable IT-driven solution. However, the integration to the real data sources from the industrial environment for example is not considered here (issue 2), leaving all data integration complexity for customer to implement by themselves.

The lack of good integration with industrial automation data sources to ingest the data to the AI Models gets even harder when it considers use cases scenarios where buffering data in memory is needed (for example the Multistream scenario described in issue 4) or, in case of time series, to acquire and ingest the proper aligned data to the model (issue 5).

To sum up, there is no solution that addresses completely the problem of scalable inference on shopfloor for multiple use cases, not limited to a specific hardware or use case, that standardizes the data collection and ingestion to AI Models, eliminating "glue-codes" to integrate with industrial data sources as well as, avoiding the custom-made containers deployment.

Accordingly, it is a task of the instant invention to make deployment and execution of AI models in industrial environments easier and to support different platforms for AI model execution.

One key aspect of the solution for this task is to move from a container deployment solution to a content deploy solution, fixing the issue of handling different custom containers at the shop floor. Another aspect is to deliver an Inference Server Runtime on Industrial Edge, enabling Industrial Edge devices to receive AI models as content and execute them, seamless integrated with the data from different data sources.

The solution of the task is given by the patent claims.

In particular, the solution comprises a method for installation and execution of an AI model in an industrial execution environment. The method comprises, in a first step, installing and executing an Industrial Inference Server Runtime on the industrial execution environment, the Industrial Inference Server being a software package set-up for receiving the AI model, connecting the AI model with data sources and data sinks, and executing the AI model. In a second step, transferring, from an AI model manager, the AI model and a configuration file to the Industrial Inference Server, the configuration file specifying the connections between the data sources and data sinks with parameters of the AI models and specifying execution parameters for the execution of the AI model. In a third step, in accordance with the content of the configuration file, wiring the AI model with the data sources and data sinks, and configuring an AI model runtime environment of the Industrial Inference Server in accordance with the content of the configuration file. Finally, in a fourth step, the method comprises executing the AI model in the AI model runtime environment. This method delivers an Inference Server Runtime on Industrial Edge, enabling Industrial Edge devices to receive AI models as content and execute them, seamless integrated with the data from different data sources.

The solution also comprises an Industrial Inference Server for installation and execution of an AI model in an industrial execution environment. This server is realized by an Industrial Inference Server Runtime, executed on the industrial execution environment and being set-up for receiving the AI model, connecting the AI model with data sources and data sinks, and executing the AI model. The Industrial Inference Server is further set-up for receiving, from an AI model manager, the AI model and a configuration file, the configuration file specifying the connections between the data sources and data sinks with parameters of the AI models and specifying execution parameters for the execution of the AI model. Moreover, the Industrial Inference Server is set-up, in accordance to the content of the configuration file, for wiring the AI model with the data sources and data sinks, and for configuring an AI model runtime environment of the Industrial Inference Server in accordance to the content of the configuration file, and finally the Industrial Inference Server is set-up for executing the AI model in the AI model runtime environment and to control an industrial an industrial process with output data of the executed AI model. This server achieves the advantages as discussed in connection with the inventive method.

Advantageous embodiments are given by the dependent claims. The features and advantages of the embodiments of the method are also valid for the arrangement (server), and vice versa.

In an advantageous embodiment, the Industrial Inference Server synchronizes time stamps of different values from different of the data sources. This allows to feed data from different sensors or data sources to the AI model. In a first synchronization method, the time stamp of a first initial value of a calculation cycle is applied to all succeeding other values in the same calculation cycle. This method is comparatively easy to employ since no specific configuration is needed. However, in some applications it is necessary to have a better control of the time stamps; in such cases a second method may be employed. In this second synchronization method, the time stamp of a selected reference value is applied to all other values in the same calculation cycle.

In an embodiment, an industrial edge device is used as the industrial execution environment, the industrial edge device being a computing device with a first connection to an industrial control network with at least one industrial controller, and with a second connection to a public network, in particular to the Internet. This makes it possible to provide the Industrial Inference Server (or the runtime software for this server), the AI model, and to control the execution of the AI model from "everywhere", but having full access to "private" shopfloor data. Alternatively, as internet or public network access is often restricted in a industrial environment due to security reasons, the AI model can be provided via an AI model manager in a restricted factory network.

The AI model can control an industrial solution in a direct matter without having to employ proxies or the like by using sensors connected to an industrial controller as data sources, the industrial controller being connected to the Industrial Inference Server and/or by using actors connected to an industrial controller as data sinks, the industrial controller being connected to the Industrial Inference Server.

Advantageously, in the fourth step, output data of the executed AI model is used for controlling an industrial process via the actors.

An example of the inventive method and the inventive server is given by the example below by means of the figures.

In this,
- figure 1: shows the system level structure diagram of the arrangement with an industrial edge device,
- figure 2: shows the synchronization of time stamps for incoming data values according to a first method, and
- figure 3: shows the synchronization of time stamps for incoming data values according to a second method.

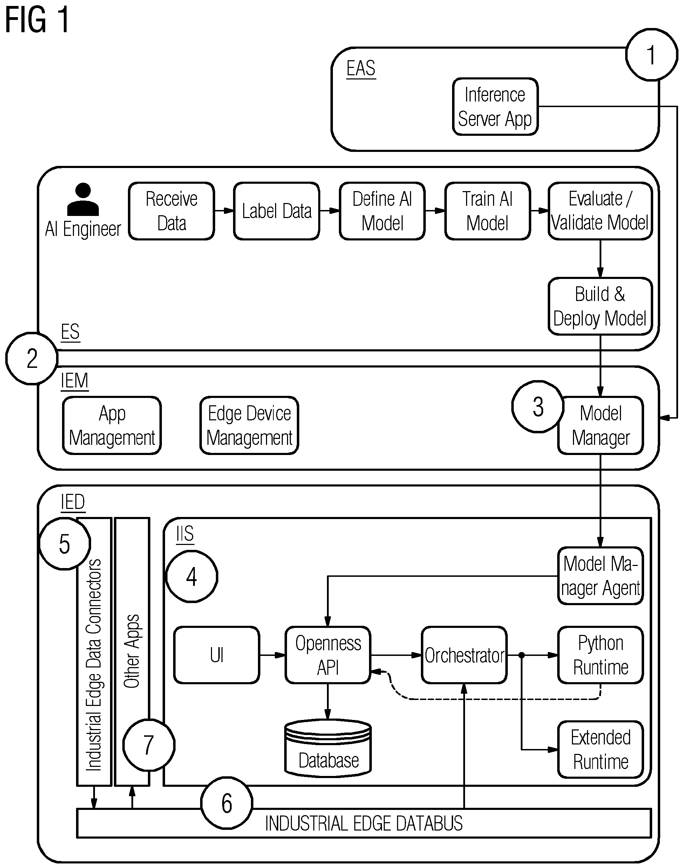

Figure 1 shows an Industrial Inference Server IIS as part of an Industrial Edge Device IED that enables the industrial edge device IED to:
- receive an AI-model or a complete AI multistep pipeline as a content (inference package) instead of installing custom made containers
- seamless integrate with different industrial data sources, eliminating any glue-code to ingest data to the model
- control/orchestrate data traffic from the data sources to the AI Model and the output of the model for a consumer application in a seamless approach
- control/orchestrate data traffic between steps in a multi-step pipeline, allowing intermediate features to be generated and fed to following steps, allowing serial and parallel data flows
- receive updates of the models or the multi-step pipeline (including single step changes) because of a retrained model for instance
- receive security patches as the Inference Server can be managed via a centralized Industrial Edge Management portal
- it also has a built-in queue capability to buffer data for multistream scenarios, and
- a time alignment feature is included for time series data to make sure data coming from multiple sources is aligned on time domain.

The Industrial Inference Server IIS is established by executing a software package called Industrial Inference Server Runtime (also called "Inference Server App"), ready-to-use and configurable by the user.

In detail, the Industrial Inference Server IIS provided by this invention is a ready-to-use app or software package to be provided to customers via a so called Edge Marketplace EAS ("Edge App Store") indicated by number 1 in the figure 1 and as such it is available as a standard app on the Industrial Edge Management (indicated as 2 in Figure 1) which means, under the App Management lifecycle provided by a manufacturer of an Industrial Edge Device IED or it's "Edge Ecosystem". Any new updated version of the Inference Server Runtime or "App" (Application) can be distributed to the edge device(s) with few clicks directly from the Industrial Edge Management System IEM, allowing customers to update multiple devices at once.

The users can then install the Inference Server App or runtime software package to any target device and every Industrial Edge Device IED which the Inference Server is to be installed on; this is then enabled to receive AI models or AI multi-step pipelines for inference. The AI Models or AI multi-step pipelines are built with an Engineering system ES and can be either manually uploaded to the Inference Server IIS via a standard UI or it can be automatically received via the application named Model Manager (indicated as 3 in figure 1). The Model Manager is not part of the instant invention.

Figure 1 also details (indicated as 4) the subcomponents of the Inference Server described below:
- Model Manager Agent: It is an Agent from the Model Manager to allow the automatic to deploy via Model Manager.
- UI: The proposed Inference Server has a standard UI which allows users to upload AI Models to the inference as well as basic monitoring capabilities to check that the models are being executed and basic controls to start/stop/resume the model execution.
- Openness API: It enables other applications to connect and interact with the AI Inference Server to exchange or consume information.
- Orchestrator: It is the responsible for orchestrating the data traffic from chosen Databus to the model and, in case of a multi-step pipeline, it also orchestrates the traffic between steps of the same pipeline.
- Python Runtime: A basic built-in Python Interpreter, which allows virtual python environments to be defined according to each pipeline specific dependencies and libraries required to work.
- Extended Runtimes: The concept includes the possibility of extending the AI Inference Server with additional Runtimes like ONNX, TFServing, etc.

The data flow orchestrated by the proposed solution considers that the Orchestrator sub-component can consume data from any data source, relying on the different data connectors available on the Industrial Edge Device IED (indicated as 5 in figure 1). The different connectors standardize the data collection but providing data via the Industrial Edge Databus (indicated as 6 in figure 1). The Orchestrator can also provide the output of the AI models directly to the Industrial Edge Databus to be consumed by other apps (indicated as 7 in figure 1) or for transmission to an Industrial Controller or PLC (Programmable Logic Controller) (not shown) for controlling an industrial process via actors connected to the Industrial Controller. Data orchestration ("wiring") and runtime parameters (like cycle time, frequencies, memory access, data links etc.) are provided via a separate configuration file, allowing for using the same AI model file for different runtime environments or platforms - only the configuration file has to be adapted for new conditions.

Via the UI of the Inference Server, the user can visualize, edit/update the mappings of data ingestion (input / data sources) or model output (data sinks) in an intuitive way whenever is needed. This brings flexibility as in case of any changes on the automation side (e.g., due to maintenance reasons), the mapping of variables (also known as "wiring" of the data source to the inference) can be done without the need to change the container or the code as it would be the case in the container approach.

The availability of the Openness API within the proposed Inference Server also brings flexibility if the user wishes to have their own specific UI to interact with the Inference Server. As the Industrial Edge is an open ecosystem, the user could just deploy a custom UI app to the Industrial Edge and interact with the ready to use inference runtime via the Openness API.

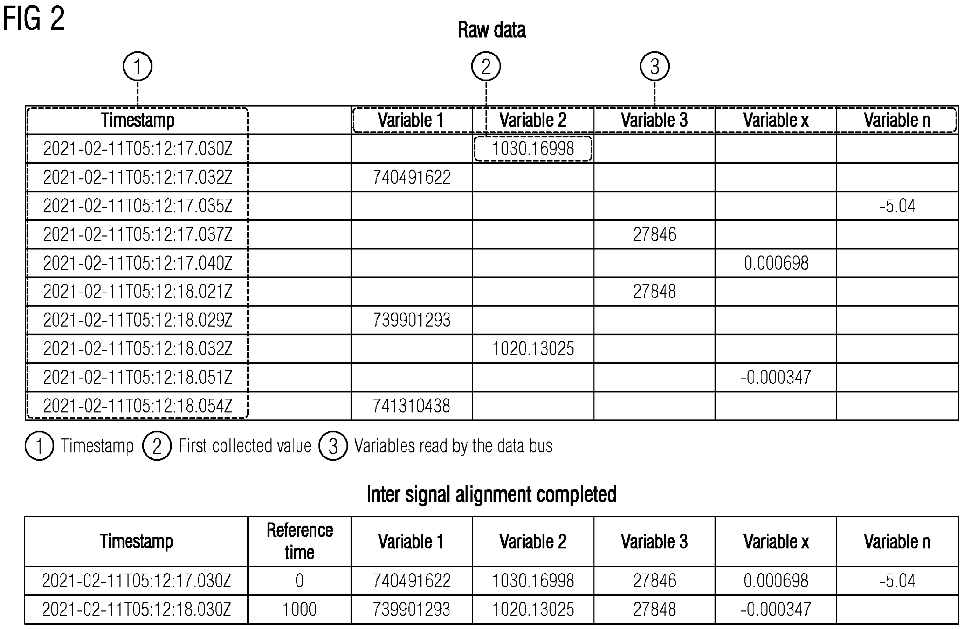

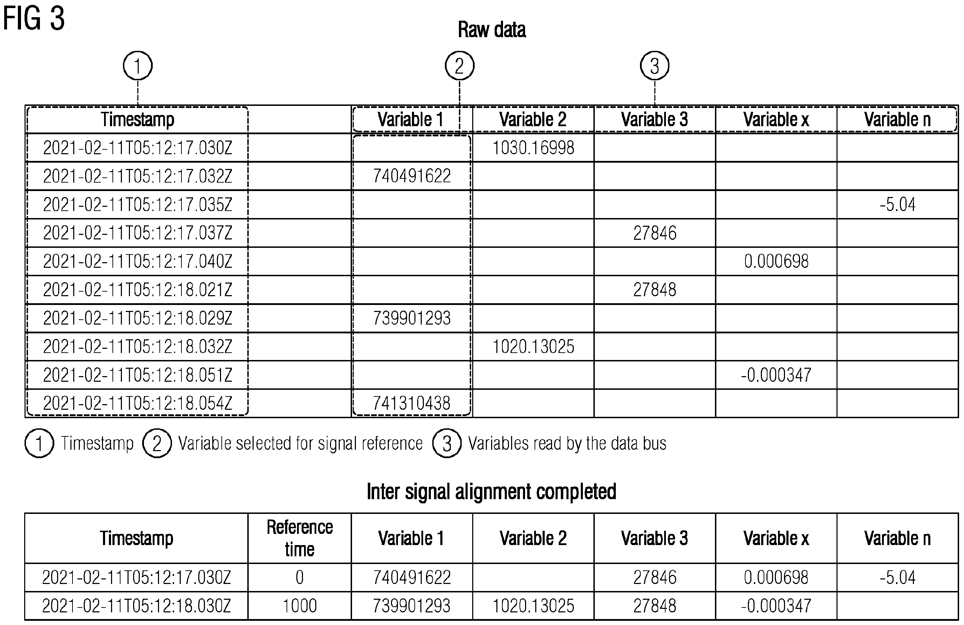

Regarding the time alignment in case of time series use cases, a feature is also implemented as shown in figures 2 and 3.

The Inference Server IIS lets users synchronize the time stamps of different tags in the same dataset. This ensures that data are equidistant thanks to a specified, predefined data periodicity. Without preprocessing, the collected raw data might contain different time stamps for each variable because the values arrive at different times (due to different reading cycles, different source PLCs, etc.).

Two methods are considered:
In a first method shown in figure 2, inter signal alignment uses the initial value method. The initial value method uses the time stamp of the very first value received as the starting point for the inter signal alignment. It does not matter to which variable this value belongs.

In a second method shown in figure 3, Inter signal alignment uses the signal reference method. The signal reference method uses a variable or multiple variables as starting point for the inter signal alignment (time stamp synchronization). The inter signal alignment starts after the first value for the selected received variable. For this, at least one variable as reference is selected for the inter signal alignment. If a user selects more than one variable, the reference for the inter signal alignment is the variable group. The inter signal alignment starts at that time when each of them collects values for the first time simultaneously.

This invention provides a solution to the user that delivers an Inference Server Runtime IIS on Industrial Edge, enabling Industrial Edge devices IED to receive AI models as content (and not, as in the art, as a complete container together with its dedicated runtime environment) and execute them, seamless integrated with the data from different data sources. This is possible thanks to the standardization of the data collection layer and the built-in integration of Inference Server to the Industrial Edge Databus plus standard connectors available on Industrial Edge.

This invention also provides the orchestration of data ingestion and multi steps of an AI pipeline, reducing time and effort to build "glue code" to execute the model on the shopfloor. In fact, no specific glue code which connects to AI model with its runtime environment and data sources and sinks have to be provided by a user. Accordingly, this invention moves from a container deployment solution to a content deploy solution, fixing the issue of handling different custom containers at the shop floor

Also, the disclosed method and system standardizes the execution of AI Models on the shopfloor by enabling the different models to be executed within the same software infrastructure, letting users focus more on the use case itself as well as the AI Algorithm (model) and less on the integration with the OT infrastructure. It provides specific features such as built-in queue capability and inter signal alignment for time series, all out-of-the-box.

Standardizing the Industrial Inference Server Runtime allows also easier extensions of monitoring capabilities as the Inference Server IIS can provide via Openness API metrics on diagnostics and health of the inference itself as well as the models/AI pipelines being executed. This again would be hard to reach by deploying custom containers on the Edge for every new model/use case.

Accordingly, the proposed solution provides better customer experience and easy maintenance by standardization of AI Model Inference at the shopfloor in industrial environment.

## Claims

1. A method for installation and execution of an AI model in an industrial execution environment,
**characterized in**,
in a first step, installing and executing an Industrial Inference Server Runtime on the industrial execution environment, the Industrial Inference Server (IIS) being a software package set-up for receiving the AI model, connecting the AI model with data sources and data sinks, and executing the AI model,
in a second step, transferring, from an AI model manager, the AI model and a configuration file to the Industrial Inference Server (IIS), the configuration file specifying the connections between the data sources and data sinks with parameters of the AI models and specifying execution parameters for the execution of the AI model,
in a third step, in accordance with the content of the configuration file, wiring the AI model with the data sources and data sinks, and configuring an AI model runtime environment of the Industrial Inference Server (IIS) in accordance with the content of the configuration file, and
in a fourth step, executing the AI model in the AI model runtime environment.

2. A method according to claim 1,
**characterized in,**
**that** the Industrial Inference Server (IIS) synchronizes time stamps of different values from different of the data sources.

3. A method according to claim 2,
**characterized in,**
**that**, in a first synchronization method, the time stamp of a first initial value of a calculation cycle is applied to all succeeding other values in the same calculation cycle.

4. A method according to claim 2 or 3,
**characterized in,**
**that**, in a second synchronization method, the time stamp of a selected reference value is applied to all other values in the same calculation cycle.

5. A method according to one of the preceding claims, **characterized in,**
**that** an industrial edge device (IED) is used as the industrial execution environment, the industrial edge device (IED) being a computing device with a first connection to an industrial control network with at least one industrial controller, and with a second connection to a public network, in particular to the Internet.

6. A method according to one of the preceding claims, **characterized in**
using sensors connected to an industrial controller as data sources, the industrial controller being connected to the Industrial Inference Server (IIS).

7. A method according to one of the preceding claims, **characterized in**
using actors connected to an industrial controller as data sinks, the industrial controller being connected to the Industrial Inference Server (IIS).

8. A method according to claim 7,
**characterized in**
using, in the fourth step, output data of the executed AI model for controlling an industrial process via the actors.

9. An Industrial Inference Server (IIS) for installation and execution of an AI model in an industrial execution environment,
**characterized in**,
- the Industrial Inference Server (IIS) being an executed Industrial Inference Server Runtime on the industrial execution environment and being set-up for receiving the AI model, connecting the AI model with data sources and data sinks, and executing the AI model,
- the Industrial Inference Server (IIS) being set-up for receiving, from an AI model manager, the AI model and a configuration file, the configuration file specifying the connections between the data sources and data sinks with parameters of the AI models and specifying execution parameters for the execution of the AI model,
- the Industrial Inference Server (IIS) being set-up, in accordance with the content of the configuration file, for wiring the AI model with the data sources and data sinks, and for configuring an AI model runtime environment of the Industrial Inference Server (IIS) in accordance with the content of the configuration file, and
- the Industrial Inference Server (IIS) being set-up for executing the AI model in the AI model runtime environment and to control an industrial an industrial process with output data of the executed AI model.

10. An Industrial Inference Server (IIS) according to claim 9,
**characterized in**
a time alignment engine for synchronizing time stamps of different values from different of the data sources.

11. An Industrial Inference Server (IIS) according to claim 10,
**characterized in**
the time alignment engine being set-up for synchronizing time stamps according to a first synchronization method, the time stamp of a first initial value of a calculation cycle being applied to all succeeding other values in the same calculation cycle.

12. An Industrial Inference Server (IIS) according to claim 10 or 11,
**characterized in**
the time alignment engine being set-up for synchronizing time stamps according to a second synchronization method, the time stamp of a selected reference value being applied to all other values in the same calculation cycle.

13. An Industrial Inference Server (IIS) according to one of claims 9-12,
**characterized in,**
**that** the industrial execution environment being an industrial edge device (IED), the industrial edge device (IED) being a computing device with a first connection to an industrial control network with at least one industrial controller, and with a second connection to a public network, in particular to the Internet.
